# EUROPEAN PATENT APPLICATION

(11) **EP 0 980 779 A2**
(43) Date of publication of application: **23.02.2000**
(21) Application number: 99850126.6
(22) Date of filing: 19.08.1999
(51) Int. Cl.: B60K 15/04

(54) **Filler pipe**

(30) Priority: 19.08.1998 SE 9802756
(71) Applicant: Raufoss Sweden AB, 421 31 Göteborg (SE)
(72) Inventor: Svensson, Nicolas, 426 68 Västra Frölunda (SE)
(74) Representative: Franzén, Lars Hjalmar

(57) **Abstract**

The present invention relates to a filler pipe and a fuel tank with a filler pipe comprising a pipe (1), one end of which is adapted to be inserted through an opening (2) in the tank wall and the other end of which is adapted to be sealed with a tank filler cap (10). Specifically the invention concerns fuel tanks of heavy vehicles such as lorries. Moreover the filler pipe is characterised in that the pipe (1) comprises radially projecting locking parts (4, 6), and that the opening comprises corresponding recesses (5) to allow, in one position, the insertion of some of the projecting parts (4) through the tank wall (3) while others of the projecting parts (6) arranged higher up are adapted to prevent the pipe from being inserted too far, the inserted parts (4), in a position turned away from the inserted position, preventing the pipe (1) from being removed, whereby a bayonet locking of the filler pipe to the tank wall is achieved. Moreover, the filler pipe comprises an outer locking ring (7) adapted to be arranged coaxially outside the pipe (1), the locking ring (7) extending between the tank wall (3) and the tank filler cap (10) when the pipe is fixed to the tank wall.

## Description

### Field of the Invention

The present invention relates to a filler pipe for fuel tanks, comprising a pipe, one end of which is adapted to be inserted through an opening in the tank wall and the other end of which is adapted to be sealed with a tank filler cap. The invention specifically relates to fuel tanks for heavy vehicles such as lorries.

### Background Art

Traditionally the filler pipe is welded to the fuel tank of a motor vehicle. This is a rather time-consuming and heavy work, which involves the risk that the tank or the pipe is deformed (which may imply, for instance, that the tank filler cap cannot be screwed on). Moreover welding is an unsuitable method when different materials are used in the tank and the filler pipe. For instance, it may be desirable to make the filler pipe of plastic. Plastic is further unsuitable for fixing by expansion of the material. Such fixing by means of expansion of the pipe when inserted is also previously known, for instance from the publication EP 0 584 763. Fixing is relatively difficult also with these methods and requires special tools and the like. In addition, the design of the filler pipes is relatively complicated so as to allow fixing with tight joints, which makes them quite expensive.

Furthermore these prior-art filler pipes cannot be dismounted, which makes it very difficult to replace them.

### Object of the Invention

An object of the present invention therefore is to provide a filler pipe for fuel tanks, which is easier and less expensive to manufacture and/or mount.

This object is achieved by a filler pipe according to the appended claims.

### Brief Description of the Drawings

In the drawings
Fig. 1 is an exploded perspective view of an inventive filler pipe;
Fig. 2 shows the inner pipe of the filler pipe in Fig. 1; and

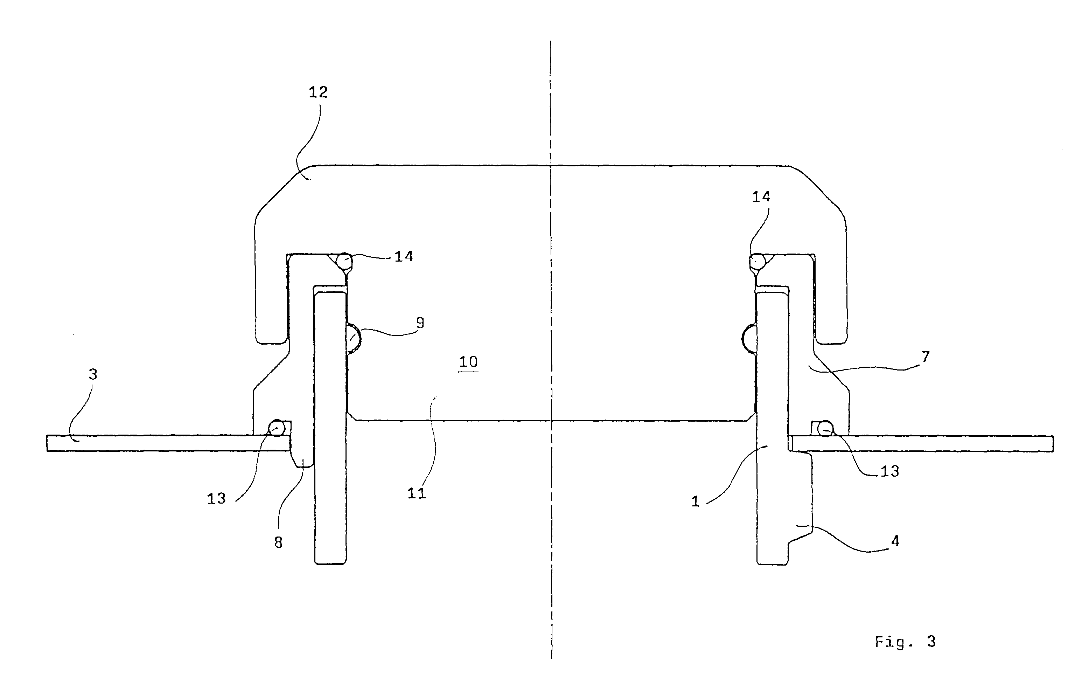

Fig. 3 is a cross-section of a mounted filler pipe according to Fig. 1.

### Description of Preferred Embodiments

The invention will now for the purpose of exemplification be described in more detail by way of embodiments and with reference to the accompanying drawings.

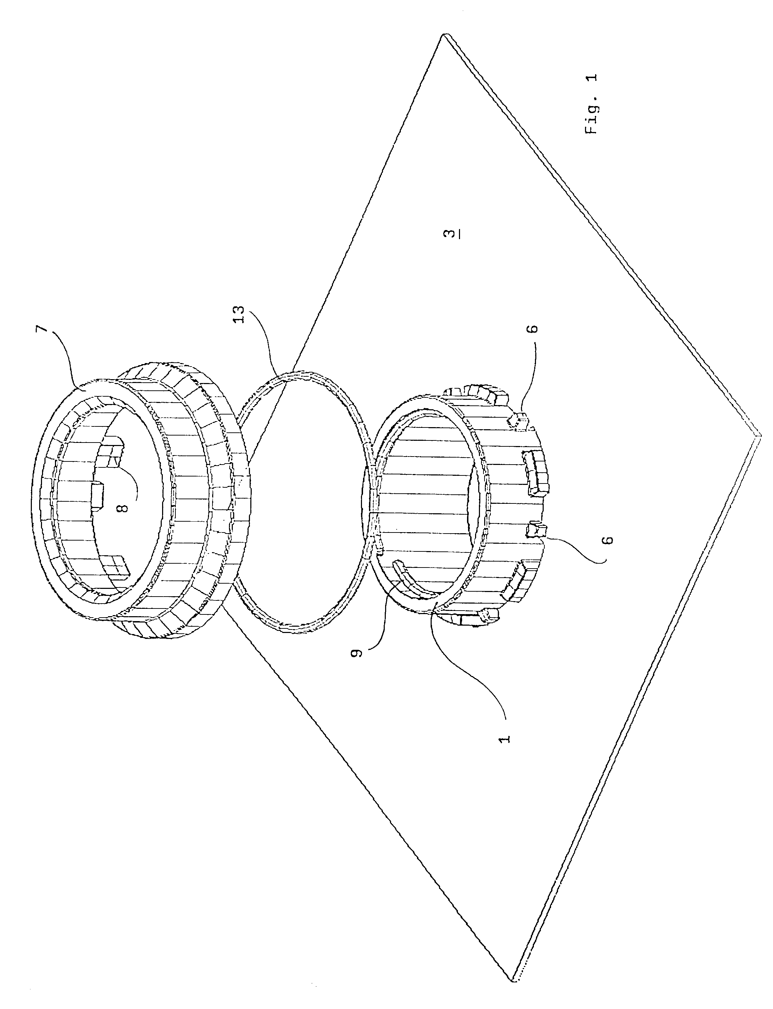

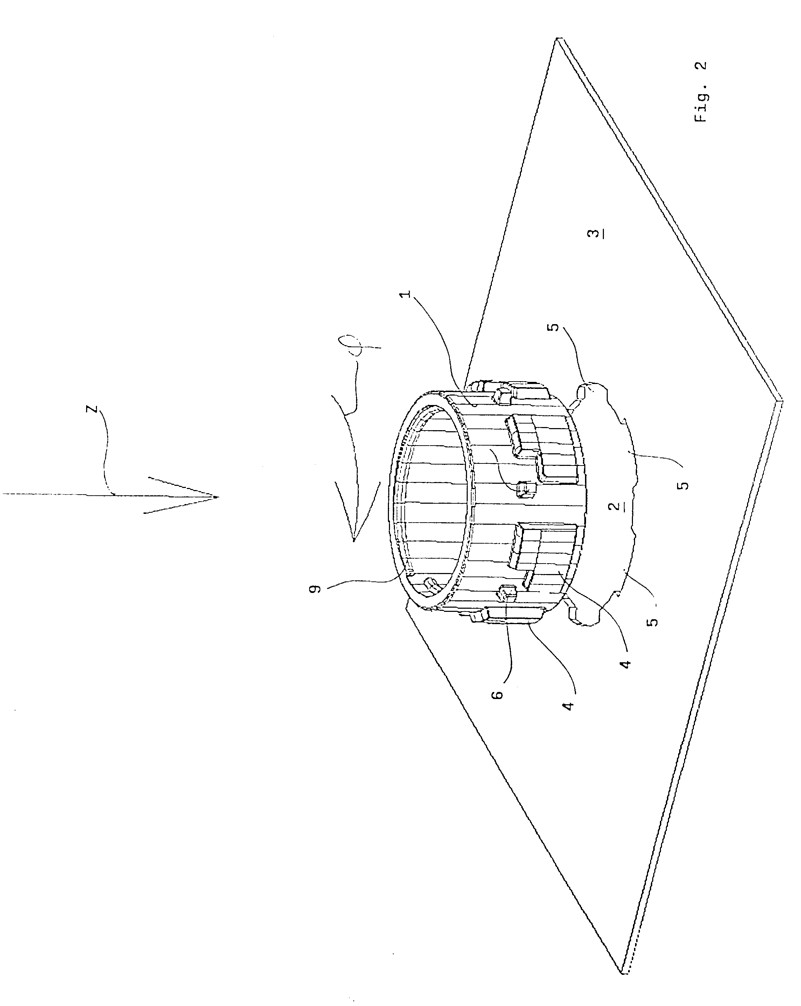

Figs 1 and 2 show a preferred embodiment of a filler pipe according to the invention. The filler pipe comprises an inner pipe 1. One end of this pipe is insertable through a preferably essentially circular opening 2 in a tank wall 3 of a fuel tank. The pipe 1 is also provided with projecting parts 4, some of which fit in corresponding recesses 5 in the edge of the opening 2. Use can be made of, for example, six insertable projecting parts 4 of the pipe 1 and, correspondingly, six symmetrically arranged recesses 5 along the circumference of the opening 2. When the projecting parts 4 have been inserted in the tank, the filler pipe can be turned so as to be locked by the projecting parts thereby getting under the "teeth" forming between the recesses 5. This results in a bayonet locking of the filler pipe. Moreover the pipe has projecting parts 6, which preferably cannot be inserted in the tank and prevent the pipe from being inserted too far into the tank. The parts 6 are located further away from the end than the insertable parts 4 and are besides arranged so that, when the pipe is in the inserted position, they are positioned in alignment with the teeth between the recesses 5. In the embodiment, the parts 6 which cannot be inserted comprise projecting pins 6, but of course other variants are feasible, such as a circumferential flange or a stepwise increase of the outer diameter of the pipe.

The insertable projecting parts 4 are preferably L shaped, one arm extending radially and the other arm extending axially, which results in the fact that they can only be inserted a predetermined distance under the "teeth" of the opening. In this manner, the axial arm will also in the inserted position project through the opening. Of course, also a T shape or the like can be used to enable turning in both directions in the fixing operation.

When mounting the inner pipe, it is oriented so that the L-shaped parts 4 are positioned in alignment with the corresponding recesses 5 of the opening, whereupon the pipe is inserted in the axial direction, as indicated by arrow Z in Fig. 2, into the tank. When the projecting, but non-insertable parts 6 prevent further insertion, the pipe is turned about its axis as indicated by arrow ϕ in Fig. 2. This turning is then stopped by the projecting arm of the L-shaped parts receiving the farther edge of the recesses 5, and in this position the pipe is locked against axial displacement.

With a view to preventing the filler pipe from being turned back, an outer sleeve, a locking ring 7, can then be slipped onto the inner pipe 1, said locking ring comprising locking pins 8 which are inserted in the areas of the recesses 5 which are not covered with the projecting parts 4. As a result, the filler pipe is prevented from turning back from the locked position.

The inner pipe further has a thread 9, preferably an internal projecting thread, i.e. on the inside of the pipe, to fix a tank filler cap 10. The tank filler cap preferably comprises an inner part 11 having a diameter slightly smaller than the inner pipe, and having grooves matching the thread, and an outer part 12 having a larger diameter than the inner pipe.

Further the locking ring 7 preferably has an axial extent so that it extends from the tank wall beyond the inner pipe 1. When the tank filler cap is screwed into the inner pipe, it will thus press the locking ring against the tank wall by means of the outer part. By arranging first packings in the form of sealing rings 13 between the locking ring and the tank wall, and second sealing rings 14 between the tank filler cap and the locking ring, a seal of the tank filler cap is established when the cap has been screwed in.

In this way, the cap will, when screwed in, at the same time secure the locking of the filler pipe and establish a reliable seal.

With a view to further improving security, the locking ring 7 can also be fixed to the pipe 1 by means of a snap lock or the like (not shown). However, this is not necessary since the tank filler cap ensures that the construction does not come loose. The snap lock is preferably such as to be automatically snapped on when the locking ring is put in place, or when the cap is screwed in for the first time. However, the snap lock should be releasable, optionally with the aid of tools, to permit exchange of the sealing rings 13, 14 etc.

Owing to the above construction, the bayonet joint between the filler pipe and the tank is locked by means of the locking ring. Moreover, the locking ring has a length so as to project beyond the filler pipe. As a result, the tank filler cap, while being screwed into the internal thread of the filler pipe, will exert an axial force pulling the filler pipe towards the cap and pressing the locking ring away from the cap, down towards the tank wall.

This construction of the filler pipe provides for rapid and easy mounting while at the same time it is now possible to use non-corroding materials, such as plastic aluminium or sinter and the like. Moreover, the filler pipe comprises a small number of parts and, among other things, only two sealing rings are required, which makes the filler pipe inexpensive to manufacture.

The invention has been described above by way of embodiments. However, further variants of the invention are feasible. For instance, the projecting parts can, of course, be arranged and designed in some other way, and still offer essentially the same function. It is also possible to provide some other seal of the inner pipe instead of using the locking ring as suggested above, although this is preferred. Furthermore the tank filler cap need not be screwed into the pipe but can, of course, also be screwed on externally, in which case the locking ring can, of course, have an extent so as not to extend beyond the inner pipe. Such as well as other close variants of the invention must be considered to be comprised by the invention as defined by the appended claims.

## Claims

1. A filler pipe for fuel tanks, comprising a pipe (1), one end of which is adapted to be inserted through an opening (2) in the tank wall and the other end of which is adapted to be sealed with a tank filler cap (10), **characterised** in that the pipe (1) comprises radially projecting locking parts (4, 6), that the opening comprises corresponding recesses (5) to allow, in one position, the insertion of some of the projecting parts (4) through the tank wall (3) while others of the projecting parts (6) arranged higher up are adapted to prevent the pipe from being inserted too far, the inserted parts (4), in a position turned away from the inserted position, preventing the pipe (1) from being removed, whereby a bayonet locking of the filler pipe on the tank wall is achieved, and that the filler pipe further comprises an outer locking ring (7) adapted to be arranged coaxially outside the pipe (1), the locking ring (7) extending, when the pipe is fixed to the tank wall, between the tank wall (3) and the tank filler cap (10).

2. A filler pipe as claimed in claim 1, **characterised** in that sealing packings (13, 14) are arranged between the locking ring (7) and the tank wall (3) as well as between the locking ring (7) and the tank filler cap (10).

3. A filler pipe as claimed in claim 1 or 2, **characterised** in that the locking ring (7) at the end facing the tank wall further comprises axially projecting locking pins (8), which are adapted to be inserted in the recesses (5) in the tank wall, thereby preventing the pipe from being turned back from the locked position.

4. A filler pipe as claimed in any one of the preceding claims, **characterised** in that it is dismountably arranged on the tank.

5. A filler pipe as claimed in any one of the preceding claims, **characterised** by a locking means, preferably a snap lock, which is arranged between the locking ring (7) and the pipe (1) and is adapted to automatically lock the locking ring to the pipe when the locking ring is being positioned above the same.

6. A filler pipe as claimed in any one of the preceding claims, **characterised** in that the recesses (5), preferably six, are symmetrically arranged along the edge of the opening (2).

7. A filler pipe as claimed in any one of the preceding claims, **characterised** in that at least some of the projecting parts (4), which are adapted to be inserted through the opening, have the shape of an L, one of the arms being positioned inside behind the tank wall in the locked position whereas the other arm projects through the recesses (5).

8. A filler pipe as claimed in any one of the preceding claims, **characterised** in that the pipe (1) comprises an internal thread (9), and that the tank filler cap comprises an inner part (11) having a corresponding outer groove, and an outer part (12) having a larger radial extent than the pipe.

9. A filler pipe as claimed in any one of the preceding claims, **characterised** in that it is made of a non-corroding material, such as aluminium, sinter or plastic.

10. A fuel tank for motor vehicles, preferably heavy vehicles such as lorries, with a tank filler pipe according to any one of the preceding claims.
